# EUROPEAN PATENT SPECIFICATION

(11) **EP 3 241 431 B1**
(45) Date of publication and mention of the grant of the patent: **10.06.2020**
(21) Application number: 17165669.7
(22) Date of filing: 10.04.2017
(51) Int. Cl.: A01J 5/017

(54) **METHOD FOR PERFORMING A TEAT-RELATED OPERATION, AND ROBOT DEVICE THEREFOR**
VERFAHREN ZUR DURCHFÜHRUNG VON VORGÄNGEN IM ZUSAMMENHANG MIT ZITZEN, UND ROBOTERVORRICHTUNG DAFÜR
MÉTHODE POUR RÉALISER UNE OPÉRATION SUR UN TRAYON, ET ROBOT À CET EFFET

(30) Priority: 03.05.2016 NL 2016721
(43) Date of publication of application: 08.11.2017
(73) Proprietor: Lely Patent N.V., 3147 PB Maassluis (NL)
(72) Inventor: DE VRIES, Johannes Roelof Gerardus, 3147 PB Maassluis (NL)
(74) Representative: Octrooibureau Van der Lely N.V.

(56) References cited:
- WO-A1-2008/030086
- WO-A1-2014/148972
- WO-A1-2015/041517
- WO-A2-2010/023122

## Description

The present invention relates to a method for performing a teat-related operation on a dairy animal with legs and teats using a robot device, wherein the robot device comprises an animal-positioning area with a longitudinal direction and configured to accommodate the dairy animal, a control unit, a robot arm which is controllable by the control unit and has an end part for performing the teat-related operation on the teats, a camera device which is operatively connected to the control unit, comprising a camera which is provided on the robot arm, and a processing device, and which is configured for repeatedly determining an image of the environment in front of the camera, by means of the camera, searching for and recognising one or more objects, such as legs, in the determined images, by means of the processing device, and determining a position of the recognised objects with respect to the camera, and wherein the method comprises the steps of providing the robot arm with the camera in a position outside the animal-positioning area, at least once performing and/or repeating determining an image of the environment in front of the camera by means of the camera, searching for a leg in the determined image by means of the processing device, determining the position of the determined leg with respect to the camera, displacing the robot arm, displacing at least the end part of the robot arm in a direction with a component at right angles to the longitudinal direction from outside the animal-positioning area to inside the animal-positioning area as far as under the dairy animal, and performing the teat-related operation.

Such robot devices are known per se in the prior art. Thus, WO2015-041517 states that the legs are important in order to prevent collisions, and WO2008/030086 states that a camera captures an image of at least the udder and preferably the rear legs. A spatial position thereof is determined and subsequently the control unit determines a route to be followed for the robot arm.

However, no mention is made of the way in which all this takes place, in particular it is not mentioned how the camera images are taken and how the robot arm is displaced in a safe and reliable manner. Given the limitations in practice, however, this is no mean feat. Thus, the field of view for such an action has a rather large opening angle, or alternatively a large distance to the dairy animal. The illuminance of cameras (with built-in lighting) diminishes greatly however with the distance, and with it the signal/noise ratio in the image and thus the reliability of information in the image. In addition, it has to be ensured as much as possible when displacing the robot arm and/or camera towards the teats that the robot arm/camera does not collide with, in particular the legs of, the dairy animal, in particular the rear leg(s) situated close to the teats. The closer the camera comes to the teats and thus the rear legs, the more the camera would have to look sideways to be able to follow these rear legs, as these can obviously move. This would then require, for example, the field of view to be much wider, or a rotatable camera, which is disadvantageous due to the increased mechanical complexity and less reliable position determination by the camera, resulting in an undesirable calibration requirement. Also, it does not seem readily possible to mechanically uncouple the camera and the robot arm, because then the distance from the camera remains undesirably large and the resolution or signal/noise ratio undesirably low, or because the viewing position with respect to the teats is then not optimal, with the risk of a leg being in the field of view.

Furthermore, it is known from the prior art to guide the robot arm to a starting position based on historical data in order to detect the teats from there and to guide the robot arm further. Thus, it is also possible to prevent the camera from having to take images at an excessive distance which, as has been described above, may be insufficiently reliable. However, in practice, it is not always possible to use historical data, while the dairy animal in question still has to be milked. For example, it is possible that the identification of the animal is not successful, for example because an ID-tag or tag reader is defective. Although it is possible to opt for not milking the animal or not performing another teat-related operation, it may, in the case of milking, be disadvantageous to postpone milking for too long. However, automated milking requires teat detection which is very difficult, if not impossible, without the unavailable historical data. Another situation in which no historical data are available, at least no reliable data, is when a dairy animal starts its next lactation. After all, in particular during the second lactation, the animal will have grown compared to the start of the first lactation, while the udder itself will also have grown, or at least will have changed, so that the initial situation as most recently determined for this first (or previous) lactation may no longer be sufficiently accurate. It will be clear that, for a dairy animal in its first lactation or for a newly acquired animal or for an animal whose data have been lost, no historical data are available at all, so that a method based on these data is ineffective.

It is therefore an object of the present invention to provide a method of the kind mentioned in the introduction which at least partly removes said drawbacks or at least provides a usable alternative for the known methods.

The invention achieves this object by a method according to Claim 1, in particular a method for performing a teat-related operation on a dairy animal with legs and teats using a robot device, wherein the robot device comprises an animal-positioning area with a longitudinal direction and configured to accommodate the dairy animal, a control unit, a robot arm which is controllable by the control unit and has an end part for performing the teat-related operation on the teats, a camera device which is operatively connected to the control unit, comprising a camera which is provided on the robot arm, and a processing device, and which is configured for repeatedly determining an image of the environment in front of the camera, by means of the camera, searching for and recognising one or more objects, such as legs, in the determined images, by means of the processing device, and determining a position of the recognised objects with respect to the camera, and wherein the method comprises the steps of providing the robot arm with the camera in a position outside the animal-positioning area, at least once performing and/or repeating determining an image of the environment in front of the camera by means of the camera, searching for a leg in the determined image by means of the processing device, if no leg has been recognised in the image: displacing the robot arm outside the animal-positioning area in a direction with a component in the longitudinal direction, until the camera device recognises a leg in the determined image, determining the position of the determined leg with respect to the camera, viewed in the longitudinal direction, displacing the robot arm in the direction of a predetermined positionary range with respect to the determined leg as long as the determined position is not in the predetermined positionary range with respect to the camera, displacing at least the end part of the robot arm in a direction with a component at right angles to the longitudinal direction from outside the animal-positioning area to inside the animal-positioning area and as far as under the dairy animal, and performing the teat-related operation.

The invention uses the insight that, as long as the robot arm moves outside the animal-positioning area, there is sufficient degree of certainty that no collision will occur. This may be ensured, for example, but not only, by the camera first moving in the longitudinal direction, i.e. parallel to a long side of the animal-positioning area. Other movements are also possible, as long as these take place outside the animal-positioning area. The camera continues to move until a leg is discovered in the image. The movements always comprise a component in the longitudinal direction and optionally a component (optionally horizontal) at right angles to the longitudinal direction. This latter component, if present, should be limited in such a way that the robot arm, at least its end part, does not enter the animal-positioning area, at least not before the specific command to this effect has been given after the relevant leg has been recognised and the robot arm has been displaced to the determined positionary range. This will be explained below in more detail.

Subsequently, it can then be determined, if desired, if the detected leg is a front leg or a rear leg. This is easily possible on the basis of data which are permanently stored in the camera device or control unit. This is because the distance between front and rear legs of all dairy animals is so great, both in an absolute sense and with respect to any realistic animal-positioning area, that this decision can easily be taken by the control unit/camera device. Then, the robot arm may, if necessary, be displaced further to an area which is deemed to be advantageous, both with regard to a reduced risk of collision with a leg and with regard to as small a distance as possible to the teats to be treated. Such an area is in principle unrelated to historical data and may optionally even be determined without any connection to the size of the animal. Thus, no historical data at all are required in order to treat the teats of the dairy animal. This is of particular importance with the automated, so-called initial milking of animals which are being milked for the very first time. Usually, this requires the robot arm to be moved onto the teats of a dairy animal by hand, which requires a lot of work and time. The invention makes this automated initial milking significantly easier and it may also make it successful for many more animals.

By furthermore thus accepting that no image of the entire dairy animal or of the relevant part thereof is taken immediately, it is possible to keep the field of view of the camera limited. This in turn makes it possible to keep the luminosity, at least the signal/noise ratio in the image, great. The reliability of the captured images is thus greater. Furthermore, the speed of movement outside the animal-positioning area can safely be higher than within this animal-positioning area, so that no time has to be lost.

Thus, with a robot arm moving in from the side and having an optionally fixed camera, the invention can, using simple means, at least with simple criteria regarding the field of view, quickly, safely and reliably connect and the like, without having to use historical data.

It should be noted here that the invention relates to robot devices which move the robot arm to the teats from the side of the dairy animal, such as so-called lateral connectors. The invention does not relate to robot devices which move the robot arm towards the teats from the front or from the rear, between the rear legs, such as the so-called rear connectors. These do not have the problem of a camera which is unable to look sideways while connecting. After all, here the movement is uninterrupted in one direction, so that the field of view may also remain uninterrupted in the same direction. However, such robot devices have drawbacks, such as a much greater risk of soiling of the robot arm or camera due to manure dropping or urine, a smaller manoeuvring area for the robot arm and, in particular for rear connectors, a worse view of the teats. The robot device according to the present invention does not have these problems, but solves the problems mentioned above.

It should also be noted here that the predetermined positionary range is situated in front of the recognised rear leg, viewed in the longitudinal direction and with respect to the intended occupying position of the animal-positioning area by the dairy animal. In other words, this positionary range is between the front and rear leg. If, based on the determined leg position, the conclusion is drawn that the detected leg is a front leg, then it is easy to move the camera/robot arm further to the rear, in the direction of the rear leg, until another leg (rear leg) is recognised in the image.

The dairy animals referred to in the present invention are all animals which are kept for milking, such as buffalo, goats, sheep and the like, but in particular cows.

Specific embodiments are described in the dependent claims, as well as in the part of the description following below.

In embodiments, the camera comprises a 3D camera, and the step of determining the position of the determined leg with respect to the camera comprises determining the distance between the camera and the determined leg, viewed in the longitudinal direction. In this way, it is relatively easy to determine a safe range. After all, it suffices if the robot arm moves inwards at at least a predetermined minimum distance to the rear leg, and advantageously also a(n equal or other, in particular greater) minimal predetermined minimum distance to the front leg, also viewed in the longitudinal direction. It should be noted that the robot arm, at least its inwardly moving end part is not necessarily fitted in the same position as the camera. Nevertheless, the positions of the camera and that end part with respect to each other will be known, so that, when the position of the camera with respect to the determined leg is known, the position of the robot arm, at least the end part, will also be known or can easily be calculated. In addition, the relevant dimensions of the robot arm, at least the end part thereof, in particular viewed in the longitudinal direction, partly determine the desired positionary range. The desired positionary range is preferably chosen accordingly.

In embodiments, the camera has a field of view which is substantially symmetrically aligned or alignable with respect to the longitudinal direction. In this case, the variant with the field of view which is symmetrically aligned with respect to the longitudinal direction provides an optimum view of the teats once the robot arm has been moved as far as under the dairy animal. Here, the term "symmetrically" is understood to mean that the central axis or main viewing direction of the field of view is within 10° of the longitudinal direction. In this case, the field of view advantageously has either a central viewing direction horizontally, so that conversion into coordinates within the animal-positioning area is very simple, or a central axis which is directed slightly upwards, which provides a slightly more advantageous viewing direction of the teats. In this case, the field of view is preferably directed to the rear, that is to say, directed along the longitudinal direction towards the rear end of a dairy animal which is standing in the animal-positioning area in an intended direction of use.

Advantageously, the camera is fixedly arranged on the robot arm. This ensures that the alignment of camera and robot arm remains constant as much as possible, so that the position determination and the teat operation can continue to take place in a reliable manner. In addition, the camera will then move along with the robot arm, so that an optimum view of the camera can also remain ensured. Nevertheless, as an alternative, it is possible to make the camera directable, for example by making it rotatable about, for example, a vertical rotation axis. This increases the flexibility of the system, since it is thus capable of looking sideways in order to then be able to direct the camera to the rear. Determining the position of a leg in the image is thus very simple, if the camera is looking at right angles to the longitudinal direction. If the leg is then situated in the centre of the image, the position of the leg corresponds to the position of the camera, in the longitudinal direction. And the camera position can easily be tracked using a device which is coupled to the actuator for displacing the camera/robot arm, such as a linear position sensor. Nevertheless, directability often goes hand in hand with mechanical complexity and partly as a result thereof reduced reliability of the determined images and/or position.

In alternative embodiments, the camera has a field of view with at least one viewing direction at right angles to the longitudinal direction, wherein the step of determining the position of the determined leg with respect to the camera comprises determining when the determined leg is in said viewing direction. In this case therefore, the camera does not have to be directed and the fixed arrangement in turn provides increased reliability. The field of view may, for example, comprise such a(n additional) viewing direction due to the fact that a mirror or the like has been provided, or because the field of view itself is already sufficiently wide to comprise this transverse viewing direction. This is possible, for example, with fisheye lenses. However, with these embodiments as well, the mechanical complexity is generally greater, or the image clarity is often slightly reduced and therefore more disadvantageous, due to the extra image angle or extra large image angle.

In embodiments, the camera device is configured to determine if the determined leg is a leg which is directed to the camera. In this case, a leg which is turned towards the camera is understood to mean a leg of the two rear or front legs which is situated closer to the camera than the other of the two rear or front legs. The camera device, or optionally the control unit, is able to determine this on the basis of the determined position, and/or the distance determined (optionally therefrom) between the determined leg and the camera. After all, there will be a significant difference in distance between the leg which is closer and the leg which is further away, namely approximately the width of the animal. Determining if the leg is a leg which is turned towards the camera or a leg which is turned away from the camera may be important for moving the robot arm. After all, if it were a leg which is turned away from the camera, the displacement of the robot arm as far as under the dairy animal could undesirably go beyond the dairy animal. Incidentally, it should be noted that in order to determine the position for displacing the robot arm as far as under the dairy animal it is less relevant, since both rear legs will be in roughly the same position in the longitudinal direction. Nevertheless, the leg turned towards the camera is more relevant. Not only can the dairy animal be situated at an angle in the animal-positioning area, so that the two rear legs do not assume the same position in the longitudinal direction. It may also be the case that the two rear legs are not directed straight down, or at least do not assume the same position. For example, one rear leg may be situated slightly to the front or to the rear, and the other may be straight or vice versa. Obviously, in order to move the robot arm as far as under the dairy animal, in particular the leg turned towards the camera is important, as the robot arm/camera can most likely not collide with the leg turned away from the camera. Incidentally, this will be explained in more detail below.

In embodiments, the step of displacing the robot arm comprises moving the robot arm, at least its end part, parallel to the longitudinal direction. Displacing the robot arm, at least its end part, parallel to the longitudinal direction, makes it simple to ensure that it remains outside the animal-positioning area. The movements can then also be performed relatively quickly, without the risks of collisions with legs. In particular, a guide rail is provided in or next to the animal-positioning area and the robot arm/camera is displaced over the guide rail. However, it is also possible to displace the robot arm/camera, or at least the end part of the robot arm, in another way. In embodiments, the robot arm is pivoted while searching for a leg, wherein the step of displacing at least the end part of the robot arm in a direction with a component at right angles to the longitudinal direction comprises pivoting and/or extending the end part further with respect to the robot arm. In this case, the robot arm is for example pivotable or rotatable on a foot or other frame. If, in addition, the robot arm is retractable and extendable, pivoting may be effected, for example, without extending, resulting in a circular movement, which may also easily be limited to outside the animal-positioning area, although this requires slightly more space. Alternatively, pivoting may take place in combination with extending and retracting. Thus, the movement of the robot arm/camera or its end part may again also take place substantially parallel to the longitudinal direction.

In embodiments, the camera device is configured to determine a position or pose of the determined leg, and the predetermined positionary range depends on the determined position/pose of the leg. The camera device is, for example, configured to determine the desired positionary range depending on the determined position of the leg. If the leg, in particular the rear leg turned towards the camera, is upright or is at least in the natural position, the "safe" area is within a predetermined positionary range. But if the leg is in a forward position, then the safe area is actually closer to the leg, since this cannot move still further forward, or at least less far than if the leg were in a straight position. Conversely, if the leg is in a rearward position, then the safe area is further to the front than with a straight leg. The predetermined positionary range may consequently be adjusted, depending on the position of the leg, for example on the angle of the leg with the vertical. Furthermore, the positionary range may be further to the rear or to the front, respectively, with a leg in a forward or rearward position, respectively, if the robot arm, at least its end part, can move as far as under the dairy animal at a greater height. All this also depends on the angle the leg makes with the vertical. Advantageously, the camera device, at least the image-processing part thereof, is configured to determine this angle, at least the position of the leg, from the determined image. This can in theory be done using prior-art image-processing techniques.

The present invention is suitable for performing all kinds of teat-related operations in a manner which is quick, reliable and safe for the animal. In embodiments, the operation comprises determining teats in the image, as well as determining positions of teats in the image. This is one of the most basic teat-related operations which may already be useful, for example, for collecting (historical and other) data for the purpose of, for example, other teat-related operations.

In embodiments, the operation furthermore comprises brushing, cleaning, stimulating, milking, stripping or performing an after-treatment, such as spraying, of the determined teats,. All these operations are required at one time or another when milking or looking after dairy animals. In all these cases, the teats have to be recognised and their positions need to be known. In most cases, at least one teat-treating apparatus is also provided and taken to the one or more recognised teats by the robot arm, such as for example a brush, sprayer or teat cup. In this case, it should be noted that in particular connecting a teat cup to a teat requires a greater degree of accuracy than brushing or spraying a teat. Because connecting a teat cup will, under otherwise unchanged conditions, take most time in relative terms, it is in this case very advantageous to at least achieve a good starting position in a quick, safe and reliable manner with the invention.

As described above, the present invention is suitable in order to move a robot arm under a dairy animal in a quick, safe and reliable manner in order then to perform a teat-related operation, and it is not necessary to have any historical data of the dairy animal available. In embodiments, the method nevertheless furthermore comprises identifying the dairy animal, and displacing the robot arm on the basis of historical data associated with the identified dairy animal, in particular prior to the step of at least once performing and/or repeating determining an image of the environment. After all, such data which can be stored after identification and retrieved again may additionally help to move the robot arm in an efficient manner. Thus, the historical data may show that the dairy animal is relatively very large or small, or has a determined defect which could possibly adversely affect determining images or determining positions and/or distances therefrom. It is also conceivable that the historical data may help to determine a rough starting position, after which the present invention is applied. As a result, it is possible, in a number of cases, to take and process fewer images and still move the robot arm, or its end part, as far as under the dairy animal and up to the determined teats in a quick, safe and reliable manner. However, it should be stressed that these historical data are supplementary and not required.

The invention also relates to a robot device according to claim 11 for performing a teat-related operation on a dairy animal with legs and teats, and comprising an animal-positioning area with a longitudinal direction and configured to accommodate the dairy animal, a control unit, a robot arm which is controllable by the control unit and has an end part for performing the teat-related operation on the teats, a camera device which is operatively connected to the control unit, comprising a camera which is provided on the robot arm, and a processing device, and which is configured for repeatedly determining an image of the environment in front of the camera, by means of the camera, searching for and recognising one or more objects, such as legs, in the determined images, by means of the processing device, and determining a position of the recognised objects with respect to the camera, wherein the robot device is furthermore configured for performing the method according to one of the preceding claims, in particular for providing the robot arm with the camera in a position outside the animal-positioning area, at least once performing and/or repeating determining an image of the environment in front of the camera by means of the camera, searching for a leg in the determined image by means of the processing device, if no leg has been recognised in the image: displacing the robot arm outside the animal-positioning area in a direction with a component in the longitudinal direction, until the camera device recognises a leg in the determined image, determining the position of the determined leg with respect to the camera, viewed in the longitudinal direction, displacing the robot arm in the direction of a predetermined positionary range with respect to the determined leg as long as the determined position is not in the predetermined positionary range with respect to the camera, displacing at least the end part of the robot arm in a direction with a component at right angles to the longitudinal direction from outside the animal-positioning area to inside the animal-positioning area and as far as under the dairy animal, and performing the teat-related operation.

The insight on which the invention is based is the same as that on which the method according to the present invention is based and does therefore not have to be repeated here.

Specific embodiments are described in the dependent claims and in the following part of the description. It should be noted here that all particular forms mentioned for the method are in principle also particular forms for the robot device and conversely, even if these are not explicitly mentioned in the description or subclaims.

In embodiments, the animal-positioning area comprises a milking station, in particular a milking stall [optionally on a platform]. In that case, the robot device is often a milking robot. All this may relate to an individual milking station and an individual milking robot, but may also relate to, for example, a milking station on a rotating platform and an associated milking robot carousel. Most often, a milking station is generally the location where a teat-related operation has to be performed, and often with the greatest required accuracy. Therefore, the invention can be used to full advantage there. Nevertheless, the animal-positioning area is not limited to a milking stall. Thus, the animal-positioning area may also be a pre- or after-treatment space in which the dairy animals are subjected to operations other than milking, such as cleaning of the teats or spraying of the teats with a desired treatment agent.

In embodiments, the animal-positioning area, in particular comprising a milking stall, comprises a longitudinal rail which runs parallel to the longitudinal direction and along which the robot arm, and in particular its end part, is displaceable. Advantageously, an actuator which is controllable by the control unit is also provided in order to displace the robot arm along the rail. In this way and in a simple manner, an animal-positioning area is provided which ensures that the robot arm or camera remains outside the animal-positioning area during displacement. Nevertheless, it is also possible to ensure this in a different way, such as by providing a rotating base for the robot arm or camera with a substantially vertical rotation axis, at such a distance from the animal-positioning area that the robot arm remains outside the animal-positioning area also during rotation on the rotating base. If desired, the robot arm may in all cases be combined with a controllable retraction and extension system, for example in order to be able to move the end part as far as under the dairy animal in a simple and controlled manner.

In some cases, it is sufficient if only the positions of teats are determined, for example for research purposes or when automatically determining a teat condition, in which case it has to be known which teat is in which condition. In such a case, the camera is provided, for example, on the end part or at least on the robot arm, so that optimum positioning of the camera with respect to the teats can be achieved. In advantageous embodiments, the robot arm, and in particular its end part, comprises at least one teat-treating device, or with respect to the camera: additional teat-treating device, which can then be taken to the teats by means of the images produced and processed by the camera device. A significant example of such a teat-treating device is a teat cup, such as a milking cup, pre- or after-treatment cup. Particularly in the case of such teat cups, it is important that it is possible to position and connect them with great accuracy, such as an accuracy of 1 cm. It is therefore very important to provide a good starting position quickly, yet safely, for this connecting operation, so that as little time as possible is lost in performing unnecessary movements. Nevertheless, it may also be advantageous to provide other teat-treating devices, such as a brush to clean teats or a sprayer to spray the teat with an agent such as cleaning liquid or a teat-dipping agent. This does not exclude other teat-treating devices.

The teat-treating device may be fixedly connected to the robot arm, such as for example the four milking cups on a Lely Astronaut® milking robot. In alternative or additional embodiments, the robot device furthermore comprises a store with at least one teat-treating device, and the robot arm comprises a gripping device for picking up a teat-treating device from the store. Such a gripper system is known, for example, from the DeLaval VMS™ milking robot.

The invention will be explained in more detail below by means of some non-limiting exemplary embodiments, which are illustrated in the drawing, and in which:
- Figure 1 shows a diagrammatic top view of a robot device according to the invention in a possible starting position,
- Figure 2 shows a diagrammatic top view of a robot device according to the invention in a possible position just before connection takes place, and
- Figure 3 shows a diagrammatic top view of another robot device according to the invention.

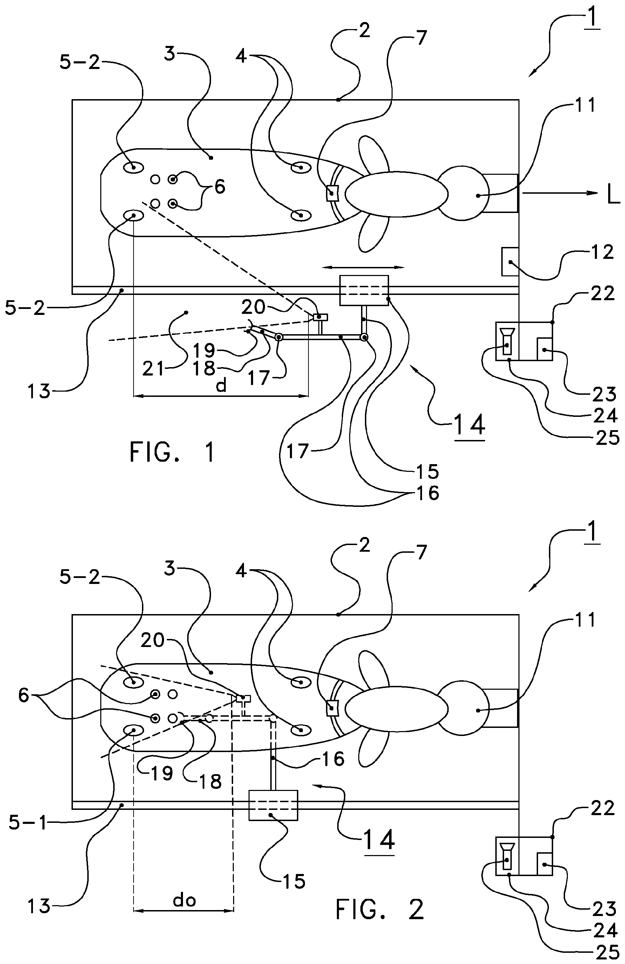

Figure 1 shows a diagrammatic top view of a robot device 1 according to the invention in a possible starting position. The robot device 1 comprises a milking stall 2 for a dairy animal 3 with front legs 4, rear legs 5-1 and 5-2 and teats 6, and with an ID tag 7 around its neck.

The robot device 1, or the milking stall 2, furthermore comprises a feed trough 11, an ID station 12 and a guide rail 13 with a robot arm arranged thereon which is generally denoted by reference numeral 14. The robot arm 14 comprises a frame 15 which is displaceable along the guide rail in the direction of the double arrow, as well as robot arm parts 16 which are movably connected by means of hinges 17, as well as an end part 18 with a gripper 19, and a camera 20 with a field of view 21.

The robot device 1 furthermore comprises a control unit 22 with an image-processing device 23, and a store 24 with a teat cup 25.

The robot device 1 is shown here on the basis of a milking stall 2 as an animal-positioning area. Such a milking stall 2 may be an individual milking stall or also a milking stall on a rotatable platform (carousel) or herringbone arrangement, etc. The milking stall 2 illustrated here has the usual access gates and the like, which are however not shown here, because they are not relevant for the invention.

Here, the milking stall 2 is occupied by a dairy animal 3 which is situated in an intended positioning location in a longitudinal direction L, enticed by means of a feed trough 11 filled with concentrate. The dairy animal 3 has to undergo a teat-related operation in the milking stall. To this end, a robot arm 14 is provided which is able, by means of a gripper 19, to pick up a teat cup 25 from a store in order to fit it to a teat 6. How all this is done will be explained in more detail below. However, it should be noted that a gripper and a store with teat cups and/or other teat-treating devices do not constitute the only possible embodiment. It is also possible to provide teat cups and/or sprayer(s) on the robot arm/the end part 18, such as for example with the Lely Astronaut® milking robot. However, this would only render the figure needlessly complicated.

The dairy animal 3, in this case for example a cow, but sometimes also a goat, buffalo or the like, enters the milking stall 2 and goes to an intended occupying position, in particular because it will be given concentrate in the feed trough 11 which is controlled by the control unit 22. The milking stall 2 is intended subject the cow to a teat-related operation. By way of example, initially this operation will be milking below, but it is not limited thereto.

For the purpose of this milking, a teat cup 25 has to be fitted to a teat 6 by means of a robot arm 14 on which a camera 20 is arranged, which in this case is a 3D camera. Such a camera is configured to produce a spatial image of the environment in front of the camera, in this case of the field of view 21. The spatial image provides position and/or distance information relating to the environment. Often, the spatial image is a 2D image with depth information, for example on the basis of time-of-flight data, such as direct time-of-flight or on the basis of phase shift after reflection. However, it should be noted that stereo cameras or, for example, laser triangulation may be a suitable means to obtain the desired distance and/or position information.

The teat cup 25 is picked up from the store 24 by the gripper 19. For the sake of clarity, only one teat cup 25 is shown in this store 24, whereas cows require four, for example, yet goats only two, for example. In addition, other or additional teat-treating devices may be provided, such as one or more teat-cleaning cups, pre-milking cups or teat sprayers. Because the operations of connecting the teat cups or spraying the teats themselves are not relevant to the invention, the below description deals mainly with the way in which the robot arm 14 or the end part 18, the gripper 19 or the camera 20 are moved as far as under the cow.

In order to take the teat cup 25, or at least the end part 18 with the gripper 19, to the teats, the robot arm 14, again at least the end part 18 and the gripper 19, has to be taken from outside the milking stall 2 to inside the milking stall and as far as under the cow 3. Obviously, this should advantageously be carried out without touching the legs 5, 6. This is achieved by the invention by taking one or more images of the environment from an optionally fixed starting position, with the end part 18 outside the milking stall 2, using the camera 20, in the field of view 21. In the field of view 21, either no leg is recognised (yet) or a leg is recognised, namely by the image-processing device 23 which is operatively connected to the camera 20 and processes the images of the camera 20 by means of software which is suitable for the purpose and known per se.

In case no leg has been recognised in the image (yet), the control unit moves the robot arm 14, at least its frame 15, over the guide rail 13 in a suitable direction. This direction always runs substantially along the longitudinal direction L of the milking stall 2, in this case simply because the guide rail 13 runs in the longitudinal direction L. Thus, it is at least ensured that the end part 18 remains outside the milking stall 2 and can thus not collide with the cow 3. The movements of the robot arm 14 can therefore be relatively fast. The abovementioned suitable direction may be chosen by the control unit on the basis of, for example, the starting position of the robot arm/frame. If this position is sufficiently far to the right (towards the head of the cow 3), then it will often suffice to displace the robot arm 14 to the left, i.e. further towards the rear in the direction of the rear legs 5-1, 5-2.

In this way, there will be a point at which the image-processing device 23 will recognise a leg in the image of the camera 20. This is often, but not necessarily, the rear leg 5-1 which is situated closest to the camera 20. It should be noted that it is not always possible to predict when, i.e. in which stage of this rearward movement, the leg will be recognised. Thus, the leg may be dirty and this may make it more difficult to recognise, and the leg may also move or be in a position which deviates from a standard vertical position, etc. Incidentally, the image-processing device 23 can determine which leg has been recognised since there is a relatively large relative difference between the position of the left rear leg 5-2 and the right rear leg 5-1, so that determining the leg unambiguously is not a problem.

Assuming that detecting the leg takes place when there is a distance d, viewed in the direction L, between the detected rear leg 5-1 and the camera 20. If recognition is already successful at a great distance, this distance d could be a distance which is too great and which could therefore cause a collision with the front legs 6 or, in the reverse case, could actually be a distance which is too small to prevent collisions with the rear legs 5-1. In order to move the end part 18 inwards safely, the control unit 22 comprises a predetermined positionary range. In this case, the determined position is in each case a relative position with respect to the camera 20, it furthermore being pointed out that it is mainly the position in the longitudinal direction which is important when moving the end part 18 inwards, at least the difference between the determined leg 5-1 and the camera 20/the end part 18. The image-processing device 23 is readily able to determine this distance in the longitudinal direction on the basis of the determined position, or optionally the determined distance in combination with a determined image angle α in the image which makes a line through the camera and the leg with the longitudinal direction L, with d = distance X cos a. In all cases, the positionary range may be selected to be e.g. between 20 cm and 50 cm in front of the determined leg, such as depending on the type of cow or other dairy animal, the age/size, etc.

In addition, it should be noted that is it possible to take into account the determined position of the leg 5-1 during this determination. If it is detected in the image that this leg 5-1 is in a forward position, due to the distance between leg 5-1 and camera 20 decreasing from top to bottom, viewed from the body of the cow, then it is possible to choose the safe range closer to the cow, such as between 10 and 60 cm in front of the leg 5-1, because the cow cannot move the leg 5-1 forward much further. Conversely, if it is detected that the leg 5-1 is in a rearward position, due to the distance between leg 5-1 and camera 20 increasing from top to bottom, viewed from the body of the cow, then it is preferable to choose the positionary range at a greater distance away, thus for example between 40 and 70 cm.

It is advisable to choose a positionary range instead of a single safe position, because it is impossible to determine with a great degree of certainty at which position a leg 5-1 will successfully be found in the image. When the determination is successful, the camera will therefore be situated at a non-predetermined distance in the longitudinal direction of the leg 5-1. If the robot arm 14 with the camera 20 would have to be moved to a single specific distance in the longitudinal direction first, before the robot arm 14 with the end part 18 is swung in, time is wasted unnecessarily. As long as the distance or position is in the predetermined "safe" range, the robot arm 14 with the end part 18 can immediately be swung in, if desired in combination with displacing the robot arm 14 with the end part 18 to an even better position in the longitudinal direction.

At no point in the entire description above have any historical data of the cow 3 been used. Although the invention does not require this per se, it may nevertheless still be advantageous to make use of them. For example, it is not necessary for the robot arm 14 to move to a determined starting position prior to the entire operation, since this may save valuable time. It may then be advantageous to know whether a determined cow in the milking stall 2 is much larger or smaller than the preceding cow. This may be determined by means of historical data, which can be retrieved by the control unit 22 by means of the ID station 12 which is able to read out the ID tag around the neck of the cow. The identity data of the cow which have thus been retrieved may be coupled to dimensions or other relevant data in the control unit 22, so that it is, for example, possible to determine, on the basis thereof, if the robot arm should move forwards or backwards along the guide rail 13 in order to be able to take a suitable image of in particular the leg 5-1.

Figure 2 shows a diagrammatic top view of a robot device according to the invention in a possible position just before connection takes place. In this figure, and in the rest of the drawing, similar or identical parts are denoted by the same reference numerals. Furthermore, in order to really connect a teat cup, a teat cup of course has to be present in the gripper, but this has been omitted here for the sake of clarity.

It can be seen that the robot arm 14, at least the frame 15, is displaced in the longitudinal direction L in such a way that the distance between the camera 20 and the leg 5-1 in the longitudinal direction is d₀ in this case. This distance do is within the predetermined positionary range, and the robot arm 14, at least the end part 18, is swung in as far as under the cow 3 by pivoting, for example, arm part 16 about a shaft (not shown) parallel to the guide rail 13. Other ways and aids which ensure that the end part 18 with the gripper moves as far as under the cow are not excluded, such as horizontal pivot hinges, telescopic cylinders etc. It should furthermore be noted that the field of view 21 of the camera 20, at least a central axis thereof, is substantially parallel to the longitudinal direction L. Using such an alignment, the view of the teats, which are to undergo the teat-related operation, is in most cases optimal. In this case, the camera 20 is shown as having the same orientation as in Figure 1, but is in fact rotated through 90°. For the sake of clarity, this has not been taken into account in the drawing.

The position of the robot arm 14 illustrated in in Figure 2 is thus suitable for performing the operation, such as connecting teat cups or spraying teats. To this end, the camera 20 continues to capture images, which are processed by the image-processing device 23. However, this is not explained any further here and reference is made to the prior art.

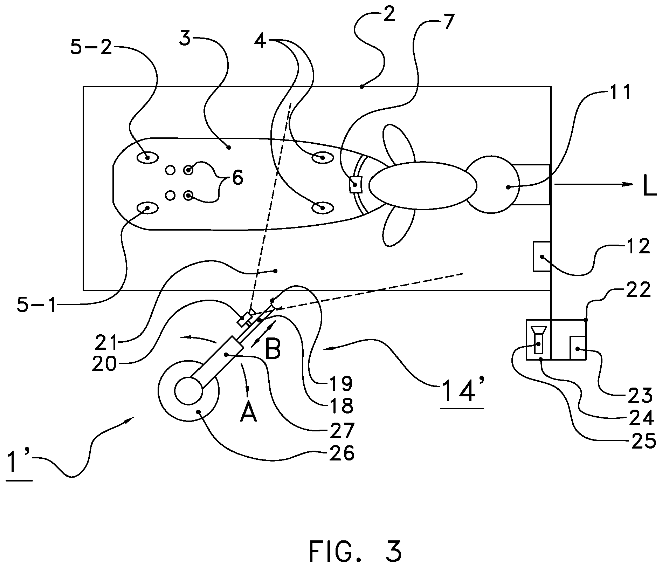

Figure 3 shows a diagrammatic top view of another robot device according to the invention. Here, the device comprises a base 26 about which the robot arm 14 is rotatable in the directions of the arrows A. The robot arm 14' is furthermore provided with a telescopic arm part 27, to which the camera 20 and the end part 18 with the gripper 19 are attached.

In this embodiment, the end part 18 with the camera 20 also moves outside the milking stall 2, and with a component parallel to the longitudinal direction L, as the arm 14' is rotated about the base 26. In this case, the distance between the base 26 and the milking stall 2 has to be such that, when the telescopic arm part 27 is retracted along the direction B, the robot arm 14' does not go inside the milking stall.

During this rotation, a different image of the cow 3 will always be created in the field of view 21, until a rear leg 5-1 is recognised in the image. Depending on the position in the image of the rear leg 5-1, the image-processing device 23 or the control unit 22 can then determine if the rotation of the robot arm 14' about the base 26 is sufficient or has to be adjusted to achieve a good starting position for extending the telescopic arm part 27. If, for example, the rear leg 5-1 is situated to the right of the centre of the image, the rotation has gone too far and the robot arm has to be rotated clockwise. All this can easily be determined in practice.

The illustrated exemplary embodiments are by no means intended as a limitation for the invention, but only as an explanation thereof. Rather, the scope of protection is determined by the attached claims.

## Claims

1. Method for performing a teat-related operation on a dairy animal (3) with legs (4, 5-1, 5-2) and teats (6) using a robot device (1),
wherein the robot device comprises:
- an animal-positioning area (2) with a longitudinal direction and configured to accommodate the dairy animal,
- a control unit (22),
- a robot arm (14) which is controllable by the control unit and has an end part (18) for performing the teat-related operation on the teats,
- a camera device which is operatively connected to the control unit, comprising a camera (20) which is provided on the robot arm, and a processing device (23), and which is configured for
- repeatedly determining an image of the environment in front of the camera (20), by means of the camera,
- searching for and recognising one or more objects, such as legs (4, 5-1, 5-2), in the determined images, by means of the processing device, and
- determining a position of the recognised objects with respect to the camera,
and wherein the method comprises the steps of:
- providing the robot arm (14) with the camera in a position outside the animal-positioning area,
- at least once performing and/or repeating:
∘ determining an image of the environment in front of the camera by means of the camera,
∘ searching for a leg in the determined image by means of the processing device, **characterized in that**
∘ if no leg (4, 5-1, 5-2) has been recognised in the image: displacing the robot arm (14) outside the animal-positioning area (2) in a direction with a component in said longitudinal direction,
- until the camera device recognises a leg in the determined image,
- determining the position of the determined leg with respect to the camera, viewed in said longitudinal direction,
- displacing the robot arm (14) in the direction of a predetermined positionary range with respect to the determined leg as long as the determined position is not in the predetermined positionary range with respect to the camera,
- displacing at least the end part (18) of the robot arm in a direction with a component at right angles to said longitudinal direction from outside the animal-positioning area to inside the animal-positioning area and as far as under the dairy animal (3), and
- performing the teat-related operation.

2. Method according to Claim 1, wherein the camera comprises a 3D camera (20), and wherein the step of determining the position of the determined leg (4, 5-1, 5-2) with respect to the camera comprises determining the distance between the camera and the determined leg, viewed in the longitudinal direction.

3. Method according to any of the preceding claims, wherein the camera has a field of view (21) which is substantially symmetrically aligned or alignable with respect to the longitudinal direction, and in particular is directed or directable to the rear, with respect to the intended occupying position of the dairy animal.

4. Method according to any of the preceding claims, wherein the camera device is configured to determine if the determined leg is a leg which is directed to the camera.

5. Method according to any of the preceding claims, wherein the step of displacing the robot arm (14) comprises moving the robot arm, at least its end part (18), parallel to the longitudinal direction, in particular over a guide rail (13) which is provided in the animal-positioning area.

6. Method according to one of Claims 1-4, wherein the robot arm is pivoted while searching for a leg, wherein the step of displacing at least the end part (18) of the robot arm (14) in a direction with a component at right angles to the longitudinal direction comprises pivoting and/or extending the end part further with respect to the robot arm.

7. Method according to any of the preceding claims, wherein the camera device is configured to determine a position or pose of the determined leg, and wherein the predetermined positionary range depends on the determined position/pose of the leg.

8. Method according to any of the preceding claims, wherein the operation comprises determining teats (6) in the image, as well as determining positions of teats in the image.

9. Method according to Claim 8, wherein the operation furthermore comprises brushing, cleaning, stimulating, milking, stripping or performing after-treatment, such as spraying, of the determined teats.

10. Method according to any of the preceding claims, furthermore comprising identifying the dairy animal, and displacing the robot arm on the basis of historical data associated with the identified dairy animal.

11. Robot device (1) for performing a teat-related operation on a dairy animal (3) with legs (4, 5-1, 5-2) and teats (6), and comprising
- an animal-positioning area (2) with a longitudinal direction and configured to accommodate the dairy animal,
- a control unit (22),
- a robot arm (14) which is controllable by the control unit and has an end part (18) for performing the teat-related operation on the teats,
- a camera device which is operatively connected to the control unit, comprising a camera (20) which is provided on the robot arm, and a processing device (23), and which is configured for
- repeatedly determining an image of the environment in front of the camera, by means of the camera,
- searching for and recognising one or more objects, such as legs, in the determined images, by means of the processing device, and
- determining a position of the recognised objects with respect to the camera,
**characterized in that**
the robot device is furthermore configured for performing the method according to one of the preceding claims, at least:
- providing the robot arm (14) with the camera (20) in a position outside the animal-positioning area (2),
- at least once performing and/or repeating:
determining an image of the environment in front of the camera by means of the camera,
searching for a leg in the determined image by means of the processing device,
if no leg has been recognised in the image: displacing the robot arm outside the animal-positioning area in a direction with a component in said longitudinal direction,
- until the camera device recognises a leg in the determined image,
- determining the position of the determined leg with respect to the camera, viewed in said longitudinal direction,
- displacing the robot arm (14) in the direction of a predetermined positionary range with respect to the determined leg (4, 5-1, 5-2) as long as the determined position is not in the predetermined positionary range with respect to the camera,
- displacing at least the end part of the robot arm in a direction with a component at right angles to said longitudinal direction from outside the animal-positioning area to inside the animal-positioning area and as far as under the dairy animal, performing the teat-related operation.

12. Robot device according to Claim 11, wherein the animal-positioning area comprises a milking station, in particular a milking stall (2).

13. Robot device according to Claim 11 or 12, wherein the animal-positioning area, in particular comprising a milking stall, comprises a longitudinal rail (13) which runs parallel to the longitudinal direction and along which the robot arm (14), and in particular its end part (18), is displaceable.

14. Robot device according to one of Claims 11-13, wherein the robot arm, and in particular its end part, comprises at least one teat-treating device (25).

15. Robot device according to one of Claims 11-14, furthermore comprising a store (24) with at least one teat-treating device, and wherein the robot arm comprises a gripping device (19) for picking up a teat-treating device (25) from the store.

16. Robot device according to one of Claims 11-15, wherein the teat-treating device comprises a teat cup (25), such as a milking cup or cleaning cup.

17. Robot device according to one of Claims 11-16, wherein the teat-treating device comprises a brush or sprayer.

## Patentansprüche

1. Verfahren zum Durchführen eines zitzenbezogenen Arbeitsvorgangs an einem Milchtier (3) mit Beinen (4, 5-1, 5-2) und Zitzen (6) unter Verwendung einer Robotervorrichtung (1),
wobei die Robotervorrichtung umfasst:
- einen zum Aufnehmen des Milchtiers ausgelegten Tierpositionierungsbereich (2) mit einer Längsrichtung,
- eine Steuereinheit (22),
- einen Roboterarm (14), der von der Steuereinheit steuerbar ist und ein Endteil (18) zum Durchführen des zitzenbezogenen Arbeitsvorgangs an den Zitzen aufweist,
- eine mit der Steuereinheit wirkverbundene Kameravorrichtung, die eine am Roboterarm bereitgestellte Kamera (20) und eine Verarbeitungsvorrichtung (23) umfasst, und ausgelegt ist zum
- wiederholten Ermitteln eines Abbilds der Umgebung vor der Kamera (20) vermittels der Kamera,
- Suchen nach und Erkennen von einem oder mehreren Objekten, wie Beinen (4, 5-1, 5-2), in den ermittelten Abbildern vermittels der Verarbeitungsvorrichtung, und
- Ermitteln einer Position des erkannten Objekts in Bezug auf die Kamera,
und wobei das Verfahren die Schritte umfasst:
- Bereitstellen des Roboterarms (14) mit der Kamera in einer Position außerhalb des Tierpositionierungsbereichs,
- wenigstens einmaliges Durchführen und/oder Wiederholen von:
∘ Ermitteln eines Abbilds der Umgebung vor der Kamera vermittels der Kamera,
∘ Suchen nach einem Bein im ermittelten Abbild vermittels der Verarbeitungsvorrichtung, **dadurch gekennzeichnet, dass**
∘ falls im Abbild kein Bein (4, 5-1, 5-2) erkannt worden ist: Verschieben des Roboterarms (14) außerhalb des Tierpositionierungsbereichs (2) in einer Richtung mit einer Komponente in der Längsrichtung,
- bis die Kameravorrichtung im ermittelten Abbild ein Bein erkennt,
- Ermitteln der Position des ermittelten Beins in Bezug auf die Kamera, in der Längsrichtung gesehen,
- Verschieben des Roboterarms (14) in Richtung eines vorbestimmten Positionierbereichs in Bezug auf das ermittelte Bein, solange sich die ermittelte Position in Bezug auf die Kamera nicht im vorbestimmten Positionierbereich befindet,
- Verschieben von wenigstens dem Endteil (18) des Roboterarms in einer Richtung mit einer Komponente im rechten Winkel zur Längsrichtung von außerhalb des Tierpositionierungsbereichs nach innerhalb des Tierpositionierungsbereichs und bis unter das Milchtier (3), und
- Durchführen des zitzenbezogenen Arbeitsvorgangs.

2. Verfahren gemäß Anspruch 1, wobei die Kamera eine 3D-Kamera (20) umfasst, und wobei der Schritt des Ermittelns der Position des ermittelten Beins (4, 5-1, 5-2) in Bezug auf die Kamera ein Ermitteln des Abstands zwischen der Kamera und dem ermittelten Bein, in der Längsrichtung gesehen, umfasst.

3. Verfahren gemäß einem der vorhergehenden Ansprüche, wobei die Kamera ein Bildfeld (21) aufweist, das in Bezug auf die Längsrichtung im Wesentlichen symmetrisch ausgerichtet oder ausrichtbar ist und insbesondere in Bezug auf die vorgesehene Belegungsposition des Milchtiers nach hinten gerichtet oder richtbar ist.

4. Verfahren gemäß einem der vorhergehenden Ansprüche, wobei die Kameravorrichtung ausgelegt ist, zu ermitteln, ob das ermittelte Bein ein zur Kamera hin gerichtetes Bein ist.

5. Verfahren gemäß einem der vorhergehenden Ansprüche, wobei der Schritt des Verschiebens des Roboterarms (14) umfasst, den Roboterarm, zumindest dessen Endteil (18), parallel zur Längsrichtung, insbesondere über eine im Tierpositionierungsbereich bereitgestellte Führungsschiene (13), zu bewegen.

6. Verfahren gemäß einem der Ansprüche 1-4, wobei der Roboterarm während des Suchens nach einem Bein verschwenkt wird, wobei der Schritt des Verschiebens von wenigstens dem Endteil (18) des Roboterarms (14) in einer Richtung mit einer Komponente rechtwinklig zur Längsrichtung umfasst, das Endteil in Bezug auf den Roboterarm weiter zu verschwenken und/oder auszufahren.

7. Verfahren gemäß einem der vorhergehenden Ansprüche, wobei die Kameravorrichtung ausgelegt ist, eine Position oder Haltung des ermittelten Beins zu ermitteln, und wobei der vorbestimmte Positionierbereich von der ermittelten Position/Haltung des Beins abhängt.

8. Verfahren gemäß einem der vorhergehenden Ansprüche, wobei der Arbeitsvorgang ein Ermitteln von Zitzen (6) im Abbild sowie ein Ermitteln von Positionen von Zitzen im Abbild umfasst.

9. Verfahren gemäß Anspruch 8, wobei der Arbeitsvorgang ferner Bürsten, Reinigen, Stimulieren, Melken, Abziehen oder Durchführen einer Nachbehandlung, wie Einsprühen, der ermittelten Zitzen umfasst.

10. Verfahren gemäß einem der vorhergehenden Ansprüche, das ferner ein Identifizieren des Milchtiers und Verschieben des Roboterarms auf der Basis von dem identifizierten Milchtier zugeordneten historischen Daten umfasst.

11. Robotervorrichtung (1) zum Durchführen eines zitzenbezogenen Arbeitsvorgangs an einem Milchtier (3) mit Beinen (4, 5-1, 5-2) und Zitzen (6), und umfassend
- einen zum Aufnehmen des Milchtiers ausgelegten Tierpositionierungsbereich (2) mit einer Längsrichtung,
- eine Steuereinheit (22),
- einen Roboterarm (14), der von der Steuereinheit steuerbar ist und ein Endteil (18) zum Durchführen des zitzenbezogenen Arbeitsvorgangs an den Zitzen aufweist,
- eine mit der Steuereinheit wirkverbundene Kameravorrichtung, die eine am Roboterarm bereitgestellte Kamera (20) und eine Verarbeitungsvorrichtung (23) umfasst, und
- ausgelegt ist zum
- wiederholten Ermitteln eines Abbilds der Umgebung vor der Kamera vermittels der Kamera,
- Suchen nach und Erkennen von einem oder mehreren Objekten, wie Beinen, in den ermittelten Abbildern vermittels der Verarbeitungsvorrichtung, und
- Ermitteln einer Position des erkannten Objekts in Bezug auf die Kamera,
**dadurch gekennzeichnet, dass**
die Robotervorrichtung ferner ausgelegt ist zum Durchführen des Verfahrens gemäß einem der vorhergehenden Ansprüche, mit wenigstens:
- Bereitstellen des Roboterarms (14) mit der Kamera (20) in einer Position außerhalb des Tierpositionierungsbereichs (2),
- wenigstens einmaligem Durchführen und/oder Wiederholen von:
Ermitteln eines Abbilds der Umgebung vor der Kamera vermittels der Kamera,
Suchen nach einem Bein im ermittelten Abbild vermittels der Verarbeitungsvorrichtung,
falls im Abbild kein Bein erkannt worden ist: Verschieben des Roboterarms außerhalb des Tierpositionierungsbereichs in einer Richtung mit einer Komponente in der Längsrichtung,
- bis die Kameravorrichtung im ermittelten Abbild ein Bein erkennt,
- Ermitteln der Position des ermittelten Beins in Bezug auf die Kamera, in der Längsrichtung gesehen,
- Verschieben des Roboterarms (14) in Richtung eines vorbestimmten Positionierbereichs in Bezug auf das ermittelte Bein (4, 5-1, 5-2), solange sich die ermittelte Position in Bezug auf die Kamera nicht im vorbestimmten Positionierbereich befindet,
- Verschieben von wenigstens dem Endteil des Roboterarms in einer Richtung mit einer Komponente im rechten Winkel zur Längsrichtung von außerhalb des Tierpositionierungsbereichs nach innerhalb des Tierpositionierungsbereichs und bis unter das Milchtier,
Durchführen des zitzenbezogenen Arbeitsvorgangs.

12. Robotervorrichtung gemäß Anspruch 11, wobei der Tierpositionierungsbereich eine Melkstation, insbesondere einen Melkplatz (2) umfasst.

13. Robotervorrichtung gemäß Anspruch 11 oder 12, wobei der insbesondere einen Melkplatz umfassende Tierpositionierungsbereich eine Längsschiene (13) umfasst, die parallel zur Längsrichtung verläuft, und entlang welcher der Roboterarm (14), und insbesondere dessen Endteil (18), verschiebbar ist.

14. Robotervorrichtung gemäß einem der Ansprüche 11-13, wobei der Roboterarm, und insbesondere dessen Endteil, wenigstens eine Zitzenbehandlungsvorrichtung (25) umfasst.

15. Robotervorrichtung gemäß einem der Ansprüche 11-14, die ferner ein Magazin (24) mit wenigstens einer Zitzenbehandlungsvorrichtung umfasst, und wobei der Roboterarm eine Greifvorrichtung (19) zum Aufnehmen einer Zitzenbehandlungsvorrichtung (25) aus dem Magazin umfasst.

16. Robotervorrichtung gemäß einem der Ansprüche 11-15, wobei die Zitzenbehandlungsvorrichtung einen Zitzenbecher (25), wie einen Melkbecher oder einen Reinigungsbecher, umfasst.

17. Robotervorrichtung gemäß einem der Ansprüche 11-16, wobei die Zitzenbehandlungsvorrichtung eine Bürste oder eine Sprüheinrichtung umfasst.

## Revendications

1. Procédé pour réaliser une opération relative aux trayons sur un animal laitier (3) avec des pattes (4, 5-1, 5-2) et des trayons (6) en utilisant un dispositif de robot (1),
le dispositif de robot comprenant :
- une zone de positionnement d'animal (2) avec une direction longitudinale et configurée pour accueillir l'animal laitier,
- une unité de commande (22),
- un bras de robot (14) qui peut être commandé par l'unité de commande et qui a une partie d'extrémité (18) pour réaliser l'opération relative aux trayons sur les trayons,
- un dispositif de caméra qui est connecté opérationnellement à l'unité de commande, comprenant une caméra (20) qui est prévue sur le bras de robot, et un dispositif de traitement (23), et qui est configuré pour :
- la détermination de manière répétée d'une image de l'environnement devant la caméra (20), au moyen de la caméra,
- la recherche et la reconnaissance d'un ou plusieurs objets, tels que des pattes (4, 5-1, 5-2), dans les images déterminées, au moyen du dispositif de traitement, et
- la détermination d'une position des objets reconnus par rapport à la caméra,
et le procédé comprenant les étapes de :
- la fourniture au bras de robot (14) de la caméra dans une position à l'extérieur de la zone de positionnement d'animal,
- la réalisation au moins une fois et/ou la répétition de :
∘ la détermination d'une image de l'environnement devant la caméra au moyen de la caméra,
∘ la recherche d'une patte dans l'image déterminée au moyen du dispositif de traitement, **caractérisé en ce que**
∘ si aucune patte (4, 5-1, 5-2) n'a été reconnue dans l'image : le déplacement du bras de robot (14) à l'extérieur de la zone de positionnement d'animal (2) dans une direction avec une composante dans ladite direction longitudinale,
- jusqu'à ce que le dispositif de caméra reconnaisse une patte dans l'image déterminée,
- la détermination de la position de la patte déterminée par rapport à la caméra, vue dans ladite direction longitudinale,
- le déplacement du bras de robot (14) dans la direction d'une plage de positionnement prédéterminée par rapport à la patte déterminée tant que la position déterminée n'est pas dans la plage de positionnement prédéterminée par rapport à la caméra,
- le déplacement d'au moins la partie d'extrémité (18) du bras de robot dans une direction avec une composante à angle droit par rapport à ladite direction longitudinale, depuis l'extérieur de la zone de positionnement d'animal vers l'intérieur de la zone de positionnement d'animal et jusqu'en dessous de l'animal laitier (3), et
- la réalisation de l'opération relative aux trayons.

2. Procédé selon la revendication 1, la caméra comprenant une caméra 3D (20), et l'étape de détermination de la position de la patte déterminée (4, 5-1, 5-2) par rapport à la caméra comprenant la détermination de la distance entre la caméra et la patte déterminée, vue dans la direction longitudinale.

3. Procédé selon l'une quelconque des revendications précédentes, la caméra ayant un champ de vision (21) qui est aligné ou peut être aligné sensiblement de manière symétrique par rapport à la direction longitudinale, et est en particulier dirigé ou peut être dirigé vers l'arrière, par rapport à la position d'occupation prévue de l'animal laitier.

4. Procédé selon l'une quelconque des revendications précédentes, le dispositif de caméra étant configuré pour déterminer si la patte déterminée est une patte qui est dirigée vers la caméra.

5. Procédé selon l'une quelconque des revendications précédentes, l'étape de déplacement du bras de robot (14) comprenant le déplacement du bras de robot, au moins de sa partie d'extrémité (18), parallèlement à la direction longitudinale, en particulier sur un rail de guidage (13) qui est prévu dans la zone de positionnement d'animal.

6. Procédé selon l'une des revendications 1 à 4, le bras de robot étant fait pivoter pendant la recherche d'une patte, l'étape de déplacement d'au moins la partie d'extrémité (18) du bras de robot (14) dans une direction avec une composante à angle droit par rapport à la direction longitudinale comprenant le pivotement et/ou l'extension de la partie d'extrémité plus loin par rapport au bras de robot.

7. Procédé selon l'une quelconque des revendications précédentes, le dispositif de caméra étant configuré pour déterminer une position ou une posture de la patte déterminée, et la plage de position prédéterminée dépendant de la position/posture déterminée de la patte.

8. Procédé selon l'une quelconque des revendications précédentes, l'opération comprenant la détermination des trayons (6) dans l'image, ainsi que la détermination des positions des trayons dans l'image.

9. Procédé selon la revendication 8, l'opération comprenant en outre le brossage, le nettoyage, la stimulation, la traite, le retrait ou la réalisation d'un post-traitement, tel que la pulvérisation, des trayons déterminés.

10. Procédé selon l'une quelconque des revendications précédentes, comprenant en outre l'identification de l'animal laitier et le déplacement du bras de robot sur la base de données historiques associées à l'animal laitier identifié.

11. Dispositif de robot (1) pour réaliser une opération relative aux trayons sur un animal laitier (3) avec des pattes (4, 5-1, 5-2) et des trayons (6), et comprenant :
- une zone de positionnement d'animal (2) avec une direction longitudinale et configurée pour accueillir l'animal laitier,
- une unité de commande (22),
- un bras de robot (14) qui peut être commandé par l'unité de commande et qui a une partie d'extrémité (18) pour réaliser l'opération relative aux trayons sur les trayons,
- un dispositif de caméra qui est connecté opérationnellement à l'unité de commande, comprenant une caméra (20) qui est prévue sur le bras de robot, et un dispositif de traitement (23), et qui est configuré pour :
- la détermination de manière répétée d'une image de l'environnement devant la caméra, au moyen de la caméra,
- la recherche et la reconnaissance d'un ou plusieurs objets, tels que des pattes, dans les images déterminées, au moyen du dispositif de traitement, et
- la détermination d'une position des objets reconnus par rapport à la caméra,
**caractérisé en ce que** le dispositif de robot est en outre configuré pour réaliser le procédé selon l'une des revendications précédentes, au moins :
- la fourniture au bras de robot (14) de la caméra (20) dans une position à l'extérieur de la zone de positionnement d'animal (2),
- la réalisation au moins une fois et/ou la répétition de :
la détermination d'une image de l'environnement devant la caméra au moyen de la caméra,
la recherche d'une patte dans l'image déterminée au moyen du dispositif de traitement,
si aucune patte n'a été reconnue dans l'image : le déplacement du bras de robot à l'extérieur de la zone de positionnement d'animal dans une direction avec une composante dans ladite direction longitudinale,
- jusqu'à ce que le dispositif de caméra reconnaisse une patte dans l'image déterminée,
- la détermination de la position de la patte déterminée par rapport à la caméra, vue dans ladite direction longitudinale,
- le déplacement du bras de robot (14) dans la direction d'une plage de positionnement prédéterminée par rapport à la patte déterminée (4, 5-1, 5-2) tant que la position déterminée n'est pas dans la plage de positionnement prédéterminée par rapport à la caméra,
- le déplacement d'au moins la partie d'extrémité du bras de robot dans une direction avec une composante à angle droit par rapport à ladite direction longitudinale, depuis l'extérieur de la zone de positionnement d'animal vers l'intérieur de la zone de positionnement d'animal et jusqu'en dessous de l'animal laitier,
- la réalisation de l'opération relative aux trayons.

12. Dispositif de robot selon la revendication 11, la zone de positionnement d'animal comprenant une station de traite, en particulier une stalle de traite (2).

13. Dispositif de robot selon la revendication 11 ou 12, la zone de positionnement d'animal, comprenant en particulier une stalle de traite, comprenant un rail longitudinal (13) qui s'étend parallèlement à la direction longitudinale et le long duquel le bras de robot (14), et en particulier sa partie d'extrémité (18), est déplaçable.

14. Dispositif de robot selon l'une des revendications 11 à 13, le bras de robot, et en particulier sa partie d'extrémité, comprenant au moins un dispositif de traitement des trayons (25).

15. Dispositif de robot selon l'une des revendications 11 à 14, comprenant en outre un élément de stockage (24) avec au moins un dispositif de traitement des trayons, et le bras de robot comprenant un dispositif de préhension (19) pour prendre un dispositif de traitement des trayons (25) dans l'élément de stockage.

16. Dispositif de robot selon l'une des revendications 11 à 15, le dispositif de traitement des trayons comprenant un gobelet trayeur (25), tel qu'un gobelet de traite ou un gobelet de nettoyage.

17. Dispositif de robot selon l'une des revendications 11 à 16, le dispositif de traitement des trayons comprenant une brosse ou un pulvérisateur.
